Europäisches Patentamt

European Patent Office

Office européen des brevets

(19)

(11) Publication number: **0 031 633**
**B1**

## EUROPEAN PATENT SPECIFICATION

(45) Date of publication of patent specification: 25.01.84

(51) Int. Cl.³: **G 02 C 7/02**

(21) Application number: **80301368.9**

(22) Date of filing: **25.04.80**

(54) Method of marking a lens of plastics material.

(30) Priority: **20.12.79 JP 165958/79**

(43) Date of publication of application:
**08.07.81 Bulletin 81/27**

(45) Publication of the grant of the patent:
**25.01.84 Bulletin 84/4**

(84) Designated Contracting States:
**BE DE FR GB IT LU NL SE**

(56) References cited:
**FR - A - 2 355 642**
**FR - A - 2 406 217**

(73) Proprietor: **Kabushiki Kaisha Hoya Lens**
**Kowada 25-banchi, Itsukaichimachi**
**Nishitamagun, Tokyo (JP)**

(72) Inventor: **Tarumi, Niro**
**280-27-302 Haijimacho**
**Akishima-City Tokyo (JP)**
Inventor: **Komiya, Shigeo**
**Miyazawacho 309-8**
**Akishima-City Tokyo (JP)**
Inventor: **Tsuchiya, Makoto**
**Otsu 132-1 Sekimachi 1-chome**
**Neima-ku Tokyo (JP)**

(74) Representative: **Harrison, David Christopher et al,**
**MEWBURN ELLIS & CO 2/3 Cursitor Street**
**London EC4A 1BQ (GB)**

Courier Press, Leamington Spa, England.

## Method of marking a lens of plastics material

The present invention relates to a method of placing indicia on an ophthalmic lens of plastics material, the indicia symbols letters numbers or other marks, and to ophthalmic lenses produced and marked by this process.

Various lenses of plastics material have been used as ophthalmic lenses due to their properties of light weight, shock resistance, heat resistance, and resistance to a wide variety of organic solvents. Such ophthalmic lenses are typically made of polymethylmethacrylate, polystyrene, polycarbonate and polydiethyleneglycol bis-allylcarbonate, the last of which is hereinafter referred to as CR-39. These lenses have been widely manufactured and sold by various suppliers for use as spectacle lenses. As will be appreciated these lenses can have a wide variety of styles and it is necessary for the manufacturers to distinguish both between lenses from different manufacturers as well as between different styles of lenses within a particular manufacturer's product line. Typical indicia include symbols, logos, letters, numbers and the like.

Prior procedures for making such lenses included printing or engraving the indicia onto the lenses themselves. However, such procedures give a rather unaesthetic appearance to the lenses and tend to disturb and detract from their optical characteristics. Moreover the marking process often requires tedious manual work, and if done faintly enough so as not to be objectionable from an aesthetic point of view a printed indication is very easily removed.

Furthermore, during this process the lenses may easily be damaged and special equipment is required for marking the lenses in this manner.

We have found that these and other disadvantages of the prior art my be overcome when the lenses are provided with hydrophilic surface defining the indicia.

A method of marking the surface of a lens made of plastics material by drying the lens with hydrogel resin is disclosed in FR-A-2355042. One of the methods described therein mentions that the drying solution, as one of it components, may contain sulfuric acid in a low concentration, presumably as a mordant. However, the aim of such marking is to colour the entire lens and this method is not appropriate for marking information-carrying indicia.

The method according to the present invention is readily accomplished by providing a hydrophilic surface treatment to the portion of the lens to which the symbol or letters or other marking is to be applied. This is accomplished by applying concentrated sulfuric acid to the lens and thus marking on it the mark or indicia desired. The concentration of the sulfuric acid is at least 50% by weight and, preferably, the concentrated sulfuric acid contains up to 1% by weight of a sulfate and preferably silver sulfate as the treatment time required to achieve the desired degree of marking is then substantially shortened. Generally speaking, the greater the concentration of the sulfuric acid the shorter the treatment time is required is and the more durable the applied mark is. When the concentration of sulfuric acid used is less than 50% a considerable amount of time is required to complete the marking process, thus concentrations of sulfuric acid less than 50% are neither practical nor economical. The treatment may be carried out at room temperature and the treatment time may be decreased by conducting the treatment at a higher temperature, for instance 60°C.

We prefer to use the polycarbonate or the CR-39 plastics material for the lenses, identified above. It has been found that when lenses are made from other plastic materials, such as polymethylmethacrylate and polystyrene, a discoloration of the marked portion may occur. Accordingly the preferred ophthalmic lenses are made from polymers of polycarbonate or CR-39.

Any of several methods may be employed for creating the marking or symbol on the surface of the lens. These include pressing a printing block or die which is permeated with the concentrated sulfuric acid onto the lens surface. Alternatively one may manually write symbols, letters or the like with a pencil or brush made of a material inert to the concentrated sulfuric acid being employed, the stylus, pencil or brush being permeated with the concentrated sulfuric acid. One may of course use a mask from which the desired symbol or letter has been cut by affixing the mask to the lens and then immersing the entire lens into a concentrated sulfuric acid solution. It will be appreciated that other methods of applying the marking to the lens surface may be used in accordance with the process of the present invention and that, in practice the operator will select the most convenient method of application.

Lenses treated in accordance with the present invention do not have a noticeable marked portion under normal conditions and in the dry state. However the mark is easily made visible when the lens is fogged, for example by a person blowing onto the lens surface. This is quite distinct from other previously suggested methods or marking in which a symbol or letter is physically engraved or printed on the surface of the lens. When a person's breath is applied to the lens surface virtually the entire surface of the lens becomes fogged with moisture which has condensed on the lens however that area to which the marking or indicia has been applied will appear to be transparent since the marked portion of the lens be it a symbol, letter or the like, is hydrophilic in nature. In addition in contrast with one procedure there is no need to use an ultraviolet light device in order to render the mark visible.

Some of the more apparent advantages of the present invention are as follows. We have found that the indicia on ophthalmic lenses treated in accordance with the method of the present invention are substantially more durable than those on conventionally marked lenses. This has been demonstrated by exposing a lens to ultraviolet rays for a period of 200 hours using a Xenon lamp to stimulate the effect of sunlight as well as by rubbing the surface of the lens 5,000 times with tissue paper. Both of these rather rigorous procedures do not remove the mark applied to the lens surface. The physical advantages are not exhibited by conventional lenses marked by engraving or the like and the durability or the marking on the lenses produced in accordance with the present invention is much higher than with conventionally marked lenses.

It has also been found that even on wiping the lens surface with water or with organic solvents, (excepting those organic solvents which dissolve the lens polymer itself) the applied marking does not disappear.

The preferred embodiment of the invention is described below with reference to the accompanying drawings in which:—

Figure 1 is a graph in which the light transmittance curves of both the ultraviolet and the visible regions of the spectrum of a lens marked in accordance with Example 1 of the present invention is compared with an unmarked lens made of the same polymer.

Figure 2a is a perspective view of a marked lens embodying the present invention in usual condition; and

Figure 2b is a perspective view of the marked lens when fogged.

The following examples are given in order to illustrate the invention. In these examples all parts and percentages are expressed by weight.

## Example 1

A CR39 lens was marked with a letter in the following manner: a polyethylene brush was dipped into 97% concentrated sulfuric acid and the sulfuric acid was applied to the lens surface in the desired pattern. The acid was allowed to remain in place for a period of 25 minutes at 25°C and thereafter washed off with water. The resulting lens appeared to be exactly the same as a normal untreated lens, both indoors and outdoors, under normal conditions. However when a person's breath was applied to the treated lens the marking appeared as a clearly visible letter with the surrounding area being fogged by condensed water vapour droplets.

This procedure was repeated and a second marked lens was produced. This second lens was exposed to ultraviolet rays for a period of 200 hours in a Xenon lamp sunshine simulator and then compared with the first-produced lens which was not exposed to ultraviolet rays. No difference could be discerned between the two lenses and the marks on each were equally clear when the lenses were breathed upon.

The second-produced lens was also subjected 5000 times to a strong wiping action with tissue paper. A comparison of the first-produced lens, which was not so treated, with the second-produced lens indicated that the clarity of the markings on the two lenses was the same. These two procedures, i.e. subjecting the lenses to ultraviolet light as well as physical abrasion of the lens surface indicate the durability of the marking produced by the process.

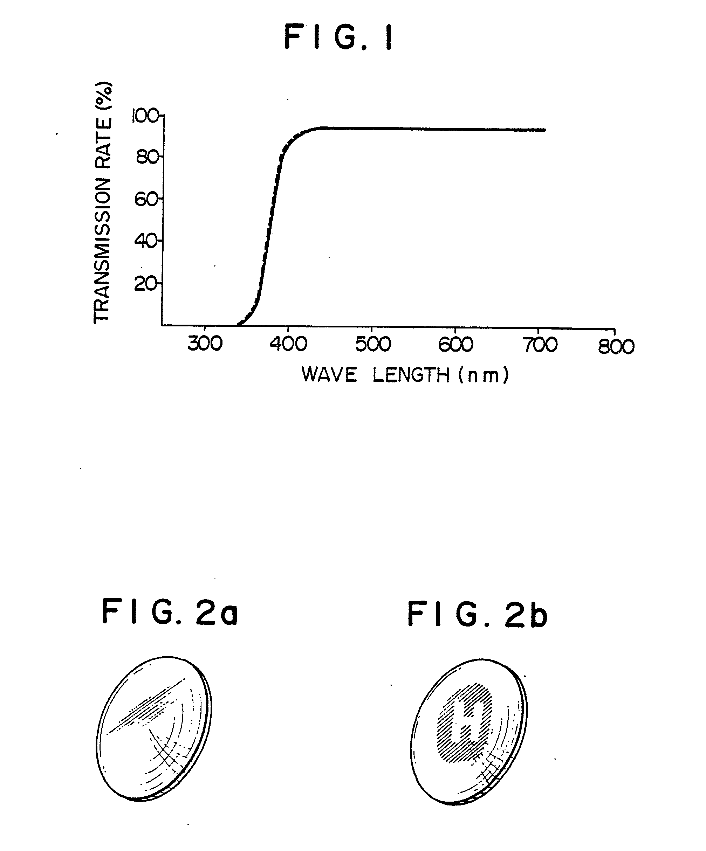

The light transmittance curves of the two lenses produced in accordance with this example were also compared with that of a normal, unmarked CR-39 lens. The results are shown in Fig. 1 in which the solid line is of a lens in accordance with Example 1 and the dotted line is that due to an unmarked CR-39 lens. The two lines coincide indicating the absence of any difference between the light transmittance curve for the marked and unmarked lenses.

## Example 2

Example 1 was repeated using a polycarbonate lens and applying 97% concentrated sulfuric acid to the lens surface in the form of a letter. After the treatment was completed and the lens washed and dried, no difference in appearance was found when the lens was compared with an unmarked normal lens either indoor or outdoor environments. Indeed, the applied marking was only rendered visible by applying the person's breath to the marked lens surface. Of course a similar breath application to the unmarked lens left a totally foggy surface without any markings being visible. The ultraviolet light test and abrasion test as outlined in Example 1 above was carried out and again no difference was seen before or after the completion of these two tests when comparing the marks appearing on the lens.

## Example 3

A CR-39 lens was marked as follows:

the marking solution used was sulfuric acid of 97% concentration which also contained dissolved therein 0.1% silver sulfate. A polyethylene brush was dipped into the acid solution and a letter was applied to the CR-39 lens surface. The acid solution was kept in contact with the lens surface for 15 minutes at 250°C and thereafter was washed off and the lens rinsed with water. The resulting lens appeared identical to a normal unmarked lens both indoors and outdoors, and upon application of person's breath only the marked lens showed the applied mark.

The ultraviolet light test and abrasion test as outlined in Example 1 above were carried out and no difference was seen before or after the completion of these two tests when comparing the marks appearing on the lens.

## Claims

1. A method of marking indicia on the surface of a lens made of plastics material characterised in that a sulfuric acid solution is applied to the lens surface in a pattern such as to form said indicia, the concentration of the sulfuric acid solution being at least 50% by weight of sulfuric acid.

2. A method according to Claim 1, wherein the concentration of the sulfuric acid solution is at least 97%.

3. A method according to Claim 1 or Claim 2, wherein said sulfuric acid solution contains up to 1.0% by weight of a sulfate.

4. A method according to Claim 3, wherein said sulfuric acid solution contains up to 0.1% by weight of a sulfate.

5. A method according to Claim 3 or Claim 4, wherein said sulfate is silver sulfate.

6. A method according to any of phe preceding Claims, wherein the method is carried out at a temperature of at least 60°C.

7. A method according to any one of the preceding Claims, wherein the sulfuric acid solution is left in contact with the surface for at time sufficient to achieve the marking and then is rinsed off with water.

8. A method according to any one of the preceding Claims, wherein the plastics material of the lens is polycarbonate or polydiethyleneglycol bisallylcarbonate.

## Revendications

1. Procédé pour marquer des signes sur la surface d'une lentille établie en matière plastique, caractérisé en ce qu'une solution d'acide sulfurique est appliquée sur la surface de la lentille suivant un motif qui constitue au signe, la concentration de la solution d'acide sulfurique représentant au moins 50% en poids d'acide sulfurique.

2. Procédé suivant la revendication 1, caractérisé en ce que la concentration de l'acide sulfurique est au moins de 97%.

3. Procédé suivant la revendication 1 ou la revendication 2, caractérisé en ce que la solution d'acide sulfurique contient jusqu'à 1% en poids d'un sulfate.

4. Procédé suivant la revendication 3, caractérisé en ce que la solution d'acide sulfurique contient jusqu'à 0,1% en poids d'un sulfate.

5. Procédé suivant la revendication 3 ou la revendication 4, caractérisé en ce que la sulfate consiste en sulfate d'argent.

6. Procédé suivant une quelconque des revendications précédentes, caractérisé en ce que le procédé est exécuté à une température d'au moins 60°C.

7. Procédé suivant une quelconque des revendications précédentes, caractérisé en ce que la solution d'acide sulfurique est maintenue en contact avec la surface pendant un temps suffisant pour effectuer le marquage et est ensuite rincée à l'eau.

8. Procédé suivant une quelconque des revendications précédentes, caractérisé en ce que la matière plastique constitutive des lentilles est un polycarbonate ou le polyéthylèneglycol bis-allylcarbonate.

## Patentansprüche

1. Verfahren zum Anbringen von Kennzeichen auf der Oberfläche einer Linse aus Kunststoff, dadurch gekennzeichnet, daß eine Schwefelsäurelösung auf der Linsenoberfläche in einem Muster zur Ausbildung des Kennzeichens aufgebracht wird, wobei die Konzentration der Schwefelsäurelösung mindestens 50 Gew.-% von Schwefelsäure beträgt.

2. Verfahren nach Anspruch 1, dadurch gekennzeichnet, daß die Konzentration der Schwefelsäurelösung mindestens 97% beträgt.

3. Verfahren nach Anspruch 1 oder 2, dadurch gekennzeichnet, daß die Schwefelsäurelösung bis zu 1 Gew.-% eines Sulfates enthält.

4. Verfahren nach Anspruch 3, dadurch gekennzeichnet, daß die Schwefelsäurelösung bis zu 0,1 Gew.-% eines Sulfates enthält.

5. Verfahren nach Anspruch 3 oder 4, dadurch gekennzeichnet, daß das Sulfat Silbersulfat ist.

6. Verfahren nach einem der vorhergehenden Ansprüche, dadurch gekennzeichnet, daß das Verfahren bei einer Temperatur von mindestens 60°C durchgeführt wird.

7. Verfahren nach einem der vorhergehenden Ansprüche, dadurch gekennzeichnet, daß die Schwefelsäurelösung mit der Oberfläche eine ausreichende Zeitdauer in Berührung bleibt, um die Kennzeichnung durchzuführen, und sodann mit Wasser abgespült wird.

8. Verfahren nach einem der vorhergehenden Ansprüche, dadurch gekennzeichnet, daß der Kunststoff der Linse Polycarbonat oder Polydiäthylenglycol Bisallylcarbonat ist.

# F I G. I

# F I G. 2a

# F I G. 2b